# EUROPÄISCHE PATENTSCHRIFT

(11) **EP 3 082 998 B1**
(45) Veröffentlichungstag und Bekanntmachung des Hinweises auf die Patenterteilung: **12.08.2020**
(21) Anmeldenummer: 14827740.3
(22) Anmeldetag: 17.12.2014
(51) Int. Cl.: B01D 27/06, B01D 27/10

(54) **BEHANDLUNGSVORRICHTUNG ZUR BEHANDLUNG VON INSBESONDERE FLÜSSIGEN FLUIDEN UND BEHANDLUNGSELEMENT EINER BEHANDLUNGSVORRICHTUNG**
TREATMENT DEVICE FOR TREATING FLUIDS, IN PARTICULAR LIQUID FLUIDS, AND TREATMENT ELEMENT OF A TREATMENT DEVICE
DISPOSITIF DE TRAITEMENT DE FLUIDES, EN PARTICULIER LIQUIDES, ET ÉLÉMENT DE TRAITEMENT D'UN DISPOSITIF DE TRAITEMENT

(30) Priorität: 19.12.2013 DE 102013021299
(43) Veröffentlichungstag der Anmeldung: 26.10.2016
(73) Patentinhaber: Mann + Hummel GmbH, 71636 Ludwigsburg (DE)
(72) Erfinder: THALMANN, Christian, 67346 Speyer (DE); HASENFRATZ, Robert, 74523 Schwäbisch Hall (DE); WAGNER, Fabian, 71696 Möglingen (DE); RÖSGEN, André, 73630 Remshalden (DE); PFLÜGER, Frank, 74343 Sachsenheim (DE)
(74) Vertreter: Seyboth, Matthias
(86) Internationale Anmeldenummer: PCT/EP2014/078240
(87) Internationale Veröffentlichungsnummer: WO 2015/091657

(56) Entgegenhaltungen:
- EP-A1- 2 108 424
- EP-A2- 0 221 675
- JP-A- 2005 349 283
- US-A- 3 325 015

## Beschreibung

### Technisches Gebiet

Die Erfindung betrifft eine Behandlungsvorrichtung, insbesondere Filtervorrichtung zur Behandlung, insbesondere Filtrierung, von insbesondere flüssigen Fluiden, insbesondere Kraftstoff, Öl oder Wasser, insbesondere einer Brennkraftmaschine, insbesondere eines Kraftfahrzeugs, mit einem Behandlungselement, welches ein Gehäuse mit einem Gehäusetopf, einem Gehäusedeckel, wenigstens einem Einlass für das zu behandelnde Fluid und wenigstens einem Auslass für das behandelte Fluid aufweist, und mit einem Anschlusskopf, der wenigstens einen Zulauf für das zu behandelnde Fluid, der mit dem wenigstens einen Einlass verbindbar ist, und/oder wenigstens einen Ablauf für das behandelte Fluid, der mit dem wenigstens einen Auslass verbindbar ist, aufweist, wobei der Anschlusskopf und das Behandlungselement mittels einer lösbaren bajonettartigen Verbindungseinrichtung unter Ausführung einer Dreh-/Steckbewegung um eine Verbindungsachse der Behandlungsvorrichtung miteinander verbunden werden können und die Verbindungseinrichtung wenigstens ein Gehäuse-Verbindungsteil auf Seiten des Gehäuses und wenigstens ein Kopf-Verbindungsteil auf Seiten des Anschlusskopfs aufweist, die zum Verbinden der Verbindungseinrichtung miteinander zusammenwirken können.

Ferner betrifft die Erfindung ein Behandlungselement einer Behandlungsvorrichtung, insbesondere einer erfindungsgemäßen Behandlungsvorrichtung, insbesondere Filtervorrichtung zur Behandlung, insbesondere Filtrierung, von insbesondere flüssigen Fluiden, insbesondere Kraftstoff, Öl oder Wasser, insbesondere einer Brennkraftmaschine, insbesondere eines Kraftfahrzeugs, welches ein Gehäuse aufweist mit einem Gehäusetopf, einem Gehäusedeckel, wenigstens einem Einlass für das zu behandelnde Fluid und wenigstens einem Auslass für das behandelte Fluid, wobei das Behandlungselement mittels einer lösbaren bajonettartigen Verbindungseinrichtung unter Ausführung einer Dreh-/Steckbewegung um eine Verbindungsachse der Behandlungsvorrichtung mit einem Anschlusskopf der Behandlungsvorrichtung verbunden werden kann und die Verbindungseinrichtung wenigstens einen Gehäuse-Verbindungsteil auf Seiten des Gehäuses aufweist, der zum Verbinden der Verbindungseinrichtung mit wenigstens einem Kopf-Verbindungsteil auf Seiten des Anschlusskopfs zusammenwirken kann, wobei der wenigstens eine Einlass mit wenigstens einem Zulauf des Anschlusskopfs für das zu behandelnde Fluid und/oder der wenigstens eine Auslass mit wenigstens einem Ablauf des Anschlusskopfs für das behandelnde Fluid verbunden werden kann.

### Stand der Technik

US 3 325 015 A zeigt einen Wechselfilter mit einer außenliegenden Dichtung. Aus EP 0 221 675 A2 ist ein Filter mit einem Verschlussmechanismus bekannt. Aus der DE 10 2010 035 465 A1 ist ein Filter bekannt zur Filtrierung von insbesondere flüssigen Fluiden, insbesondere Kraftstoff oder Öl, insbesondere einer Brennkraftmaschine, mit einem Filtertopf, in dem ein Filterelement angeordnet ist, und einem Filterkopf, der einen Einlass und/oder einen Auslass für das Fluid aufweist. Der Filterkopf und der Filtertopf sind mittels einer lösbaren bajonettartigen Dreh-/Steckverbindung miteinander verbunden. Die Dreh-/Steckverbindung weist wenigstens zwei zusammenwirkende Rastbauteile auf, von denen eines mit dem Filtertopf und eines ist mit dem Filterkopf verbunden ist.

Der Erfindung liegt die Aufgabe zugrunde, eine Behandlungsvorrichtung und einen Wechselfilter einer Filtervorrichtung der eingangs genannten Art zu gestalten, bei der/dem das Verbinden des Behandlungselements, insbesondere des Wechselfilters, mit dem Anschlusskopf und ein Trennen von dem Anschlusskopf erleichtert werden kann. Ferner soll der Platzbedarf insbesondere der Verbindungseinrichtung, insbesondere in axialer Richtung bezüglich der Verbindungsachse, verringert werden.

### Offenbarung der Erfindung

Diese Aufgabe wird erfindungsgemäß dadurch gelöst, dass wenigstens ein erstes der Verbindungsteile auf bezüglich der Verbindungsachse axial gegenüberliegenden Seiten jeweils eine Funktionsfläche aufweist und wenigstens ein zweites der Verbindungsteile wenigstens eine Gegenfunktionsfläche aufweist, welche zum Zusammenwirken eine der Funktionsflächen des wenigstens einen ersten Verbindungsteils hintergreift, und auf Seiten des wenigstens einen zweiten Verbindungsteils wenigstens ein Führungselement angeordnet ist, welches mit der wenigstens einen Gegenfunktionsfläche wenigstens einen Einführspalt begrenzt, dessen bezüglich der Verbindungsachse axiale Ausdehnung wenigstens so groß ist wie der maximale axiale Abstand der beiden axial gegenüberliegenden Funktionsflächen des wenigstens einen ersten Verbindungsteils und in dem das wenigstens eine erste Verbindungsteil beim Schließen/ Offnen der Verbindungseinrichtung geführt werden kann, wobei eine der Funktionsflächen des wenigstens einen ersten Verbindungsteils an der Gegenfunktionsfläche entlang geführt wird und die andere der Funktionsflächen an dem wenigstens einen Führungselement entlang geführt wird.

Erfindungsgemäß ist wenigstens ein Führungselement, insbesondere ein Führungszapfen, vorgesehen, mit dessen Hilfe das wenigstens eine erste Verbindungsteil auf der der Gegenfunktionsfläche axial gegenüberliegenden Seite geführt werden kann. Das wenigstens eine Verbindungsteil kann so zwischen dem wenigstens einen Führungselement und der entsprechenden Gegenfunktionsfläche des wenigstens einen zweiten Verbindungsteils geführt werden. Auf diese Weise kann eine präzise Dreh-/Steckbewegung ausgeübt werden. Ferner kann das Risiko, dass das Behandlungselement beim Anbau/Abbau gegenüber der Verbindungsachse verkantet wird, verringert werden. Mithilfe des wenigstens einen Einführspalts kann beim Anbau des Behandlungselements einfach eine genaue Positionierung des wenigstens einen ersten Verbindungsteils relativ zu wenigstens einen zweiten Verbindungsteil erfolgen.

Die wenigstens eine Gegenfunktionsfläche hintergreift wenigstens eine der Funktionsflächen des wenigstens einen Verbindungsteils. Auf diese Weise kann zwischen der wenigstens einen Gegenfunktionsfläche und der entsprechenden Funktionsfläche eine Zugverbindung axial zur Verbindungsachse realisiert werden.

Erfindungsgemäß ist vorgesehen, dass die Verbindungsteile radial innerhalb von Umfangswänden des Gehäuses und des Anschlusskopfs angeordnet sind und eine Dichtungseinrichtung zum Abdichten eines fluidführenden Bereichs der Behandlungsvorrichtung zur Umgebung hin vorgesehen ist mit einer äußere Ringdichtung, die am Gehäusedeckel des Behandlungselements radial innerhalb des Gehäuse-Verbindungsteils angeordnet ist

Die wenigstens eine Gegenfunktionsfläche kann sich vorteilhafterweise zur Realisierung der bajonettartigen Verbindung umfangsmäßig bezüglich der Verbindungsachse erstrecken. Vorteilhafterweise kann die umfangsmäßige Erstreckung der Bereiche der bajonettartigen Verbindungseinrichtung, in der im Schließzustand der Verbindungseinrichtung die wenigstens eine Gegenfunktionsfläche mit der entsprechenden wenigstens einen Funktionsfläche zusammenwirkt, wenigstens 50 %, bevorzugt mehr als 60 %, des Umfangs des Behandlungselement betragen. Auf diese Weise kann ein entsprechend großer Bereich realisiert werden, der kraftübertragend wirken kann. Ferner können die Kräfte zwischen dem Behandlungselement und dem Anschlusskopf umfangsmäßig gleichmäßiger und besser wirken. Außerdem können so insgesamt größere Kräfte übertragen werden. Die Stabilität der Verbindung mit der Verbindungseinrichtung kann so verbessert werden. Die mechanische Belastung der Verbindungseinrichtung kann so verringert werden. Dies kann sich positiv auf die Standzeiten auswirken.

Bei einer vorteilhaften Ausführungsform können die wenigstens eine Gegenfunktionsfläche und die wenigstens eine mit dieser zusammenwirkende Funktionsfläche jeweils wenigstens ein Rastelement, insbesondere einen Rastvorsprung oder einen Rastabschnitt, wenigstens einer Rastsicherung aufweisen, welche in der Schließposition der wenigstens einen Verbindungseinrichtung hintereinander, miteinander oder ineinander verrasten können. Mit der Rastsicherung kann eine Gefahr verringert werden, dass sich die Verbindungseinrichtung durch eine ungewünschte Drehung des Behandlungselements um die Verbindungsachse lösen kann. Zum Schließen und Lösen der wenigstens einen Rastsicherung können die entsprechenden Rastelemente durch die entsprechende Drehung des Behandlungselements voneinander getrennt oder aneinander vorbei geführt werden. Hierzu kann es erforderlich sein, entsprechende Rastkräfte zu überwinden. An einem derartigen erhöhten Kraftaufwand beim Anbau kann auch einfach erfasst werden, sobald das Behandlungselement in seiner korrekten Position ist.

Bei einer weiteren vorteilhaften Ausführungsform kann die Verbindungseinrichtung wenigstens ein Vorspannelement aufweisen zur Realisierung einer mechanischen Vorspannung, mit der die wenigstens eine Gegenfunktionsfläche gegen die wenigstens eine Funktionsfläche gepresst werden kann. Auf diese Weise kann die Verbindungseinrichtung unter einer mechanischen Spannung gehalten werden. Betriebsbedingte Vibrationen können so gedämpft werden. Auch können betriebsbedingte Geräusche verringert werden. Insbesondere kann ein etwaiges Klappern verhindert werden. Ferner kann eine etwaige Rastkraft, welche zum Schließen oder Offnen der Verrastung überwunden werden muss, erzeugt oder vergrößert werden.

Das wenigstens eine Vorspannelement kann vorteilhafterweise an dem Anschlusskopf angeordnet sein. Auf diese Weise kann es als Lebensbauteil ausgelegt sein. Es muss nicht gemeinsam mit dem Behandlungselement ausgetauscht werden. Alternativ oder zusätzlich kann wenigstens ein Vorspannelement an dem Gehäuse angeordnet sein. Es kann so gemeinsam mit dem Behandlungselement ausgetauscht werden.

Das wenigstens eine Vorspannelement kann vorteilhafterweise elastisch sein. Das wenigstens eine Vorspannelement kann aufgrund seiner Form und/oder seiner Materialzusammensetzung elastisch sein. Vorteilhafterweise kann das wenigstens eine Vorspannelement Kunststoff, insbesondere Elastomer, aufweisen oder daraus sein. Vorteilhafterweise kann das wenigstens eine Vorspannelement ein Federelement, insbesondere eine Blattfeder, sein oder aufweisen. Es kann vorteilhafterweise aus einem elastischen Metall sein.

Das wenigstens eine Vorspannelement kann zusätzlich eine Dichtungsfunktion ausüben. Das wenigstens eine Vorspannelement kann mit einer Dichtung oder Dichtungseinheit kombiniert sein oder umgekehrt. Zusätzlich oder alternativ kann das wenigstens eine Vorspannelement mit einer Rücklaufsperrmembran des Behandlungselements realisiert sein oder umgekehrt. Mit der Rücklaufsperrmembran kann vorteilhafterweise einen Durchlass des Gehäuses für Fluid, bevorzugt der wenigstens eine Einlass, in eine Strömungsrichtung verschließbar sein. Auf diese Weise kann ein Rücklauf des Fluids verhindert werden.

Gegebenenfalls kann eine Dichtung zwischen einer Rohseite und einer Reinseite des Behandlungselements, insbesondere eines Filterelements, angeordnet sein.

Das wenigstens eine erste Verbindungsteil und/oder das wenigstens eine zweite Verbindungsteil können jeweils mit einer Vergleich zu ihrer bezüglich der Verbindungsachse radialen und umfangsmäßigen Ausdehnung geringen Materialdicke realisiert sein. Die Materialdicken des wenigstens einen ersten Verbindungsteils und des wenigstens einen zweiten Verbindungsteils können ähnlich groß sein.

Bei einer weiteren vorteilhaften Ausführungsform kann die Materialdicke des wenigstens einen ersten Verbindungsteils und/oder des wenigstens einen zweiten Verbindungsteils vorteilhafterweise maximal 3 mm, bevorzugt zwischen 1 mm und 2 mm, sein.

Bei einer weiteren vorteilhaften Ausführungsform kann die axiale Ausdehnung des wenigstens einen Einführspalts maximal 3 mm, vorzugsweise zwischen 1 mm und 2 mm, sein.

Die Verbindungsteile können aus Halbzeug oder Formteilen entsprechend geformt, insbesondere gebogen, gefalzt, geknickt, geschnitten oder gestanzt oder dergleichen, sein. Auf diese Weise können gegebenenfalls die entsprechenden Rastabschnitte und (Gegen-)Führungsabschnitte realisiert werden.

Vorteilhafterweise kann radial innerhalb der ersten Verbindungsteile, die aus Halbzeug oder Formteilen geformt, insbesondere gebogen, gefalzt, geknickt, geschnitten oder gestanzt oder dergleichen, sind, wenigstens ein Teil des Halbzeugs oder der Formteile vorgesehen sein. Vorteilhafterweise ist der radial innerhalb der ersten Verbindungsteile angeordnete Teil des Halbzeugs oder der Formteile in Umfangsrichtung geschlossen. Hierdurch kann die Stabilität der Verbindungseinrichtung und damit die Steifigkeit und Dauerbelastbarkeit der Verbindung zwischen den Verbindungseinrichtungen verbessert werden.

Die Verbindungsteile sind erfindungsgemäß radial innerhalb wenigstens einer Umfangswand des Gehäuses und des Anschlusskopfs angeordnet. Auf diese Weise kann die bajonettartige Verbindungseinrichtung zur Umgebung hin geschützt werden. Die Verbindungseinrichtung kann vorteilhafterweise in einem entsprechenden Verbindungsraum zwischen dem Gehäuse und dem Anschlusskopf angeordnet sein.

Vorteilhafterweise kann die wenigstens eine Gegenfunktionsfläche über eine möglichst große, bevorzugt ihre gesamte Ausdehnung in Umfangsrichtung und in radialer Richtung bezüglich der Verbindungsachse an der entsprechenden Funktionsfläche anliegen. Auf diese Weise kann eine Kraftübertragung zwischen dem Verbindungsteilen verbessert werden. Entsprechende Führungskonturen der wenigstens einen Gegenfunktionsfläche können beim Offnen und Schließen der Verbindungseinrichtung an den entsprechenden Führungskonturen der entsprechenden Funktionsfläche entlang gleiten.

Auf diese Weise kann ein etwaiges Vorspannungselement und/oder eine Dichtung beim Verschließen der Verbindungseinrichtung axial komprimiert werden. Im Falle einer Dichtung kann so zusätzlich die Dichtfunktion verbessert werden.

Vorteilhafterweise können die wenigstens eine Gegenfunktionsfläche und die entsprechende mit ihr zusammenwirkende Funktionsfläche komplementär sein. Auf diese Weise können sie in der Schließposition der Verbindungseinrichtung flächig aneinander liegen. So kann eine Kraftübertragung verbessert werden. Eine Belastung auf die beteiligten Bauteile kann so weiter verringert werden. Die Bauteile können zur Übertragung gleicher Kräfte kleiner dimensioniert sein. Durch den aneinander angepassten Verlauf der Verbindungsteile können die axialen Ausdehnungen der Verbindungsteile entsprechend verringert werden. Vorteilhafterweise können die Verbindungsteile gegenseitig eingreifende Formteile sein. Die Konturen der wenigstens einen Gegenfunktionsfläche und der entsprechenden Funktionsfläche können beim Offnen oder Schließen der Verbindungseinrichtung aneinander entlang gleiten.

Bei einer weiteren vorteilhaften Ausführungsform können die wenigstens eine Gegenfunktionsfläche und wenigstens die mit dieser zusammenwirkende Funktionsfläche jeweils einen etwa schraubenförmigen Verlauf um die Verbindungsachse haben. Auf diese Weise kann das Gehäuse-Verbindungsteil beim Drehen des Behandlungselements in Schließdrehrichtung mittels der Verbindungsteile gleichzeitig in axialer Richtung zu dem Anschlusskopf hingezogen werden. So kann eine kombinierte Dreh-/Steckbewegung realisiert werden. Die Steigungen der wenigstens eine Gegenfunktionsfläche und der wenigstens einen Funktionsfläche können vorteilhafterweise identisch sein.

Vorteilhafterweise können die Steigungen der Steigung eines üblichen Rechtsgewindes entsprechen. Auf diese Weise kann die Verbindungseinrichtung, wie insbesondere bei Kraftstofffiltern oder Ölfiltern üblich, durch Drehung des Behandlungselements dem Rechtsdrehsinn geschlossen und in umgekehrter Richtung geöffnet werden.

Vorteilhafterweise kann eine Höhe axial zur Verbindungsachse, welche beim Schließen der bajonettartigen Verbindungseinrichtung zurückgelegt wird, mit einem axialen Abstand einer etwaigen Dichtung auf Seiten eines der Verbindungsteile von einer entsprechenden Dichtungsfläche auf Seiten des anderen Verbindungsteils entsprechen. Auf diese Weise kann durch die Dreh-/Steckverbindung beiden Schließen der Verbindungseinrichtung die entsprechende Dichtung an der entsprechenden Dichtungsfläche positioniert werden.

Bei einer weiteren vorteilhaften Ausführungsform können das Behandlungselement, insbesondere ein Gehäusedeckel und/oder eine Endscheibe eines etwaigen Filterelements, und der Anschlusskopf jeweils wenigstens ein Korrespondenzelement, insbesondere einen Stutzen, bevorzugt einen Anschlussstutzen und/oder Verbindungsstutzen und/oder Dichtungsstutzen und/oder Zylinderstutzen, aufweisen, welche bei montiertem Behandlungselement paarweise korrespondieren können. Vorteilhafterweise können Korrespondenzelemente, insbesondere die Stutzen, paarweise ineinandergreifen. Auf diese Weise können die Korrespondenzelemente radial bezüglich der Verbindungsachse relativ zueinander fixiert werden. Alternativ können die Korrespondenzelemente paarweise auf Stoß, insbesondere unter Zwischenlage einer Dichtungseinrichtung, angeordnet sein. Auf diese Weise können bezüglich der Verbindungsachse radiale Lagetoleranzen einfach kompensiert werden.

Vorteilhafterweise kann wenigstens ein Paar von Korrespondenzelementen einen fluidführenden Raum radial außen und/oder radial innen begrenzen.

Bei einer weiteren vorteilhaften Ausführungsform kann wenigstens ein Paar von Korrespondenzelementen innerhalb wenigstens eines anderen Paares von Korrespondenzelementen angeordnet sein. Auf diese Weise kann in dem inneren Paar von Korrespondenzelementen ein erster fluidführender Bereich, insbesondere ein Auslasskanal für das Fluid, realisiert werden.

Zwischen den inneren Paar von Korrespondenzelementen und dem äußeren Paar von Korrespondenzelementen kann vorteilhafterweise ein zweiter fluidführender Bereich, insbesondere ein Einlassringraum für das Fluid, realisiert werden.

Die Korrespondenzelemente, insbesondere die Paar von Korrespondenzelementen, können jeweils koaxial zur Verbindungsachse sein. Auf diese Weise können sie einfacher relativ zueinander positioniert werden. Ferner können so die fluidführenden Bereiche umfangsmäßig gleichmäßiger sein.

Wenigstens ein Paar von Korrespondenzelementen, insbesondere ein radial äußeres Paar von Korrespondenzelementen, kann vorteilhafterweise mehrere fluidführende Bereiche, insbesondere wenigstens einen Einlassbereich und wenigstens einen Auslassbereich für das Fluid, umfangsmäßig umgeben. Auf diese Weise können die entsprechenden fluidführenden Bereiche einfach mit nur einem Paar von Korrespondenzelementen zu Umgebung hin abgegrenzt werden. Hierbei können Kontaktbereiche zwischen den Korrespondenzelementen eines Paares gegebenenfalls mit nur einer einzigen Dichtungseinheit abgedichtet werden.

Vorteilhafterweise können die Verbindungsteile der Verbindungseinrichtung radial außerhalb des Paares von Korrespondenzelementen angeordnet sein, welches alle fluidführenden Bereiche umfangsmäßig umgeben kann. Auf diese Weise können die fluidführenden Bereiche mit nur einem Paar von Korrespondenzelementen, gegebenenfalls mit nur einer Dichtungseinrichtung, von dem Verbindungsteilen der Verbindungseinrichtung, bevorzugt auch von der Umgebung getrennt werden. Die Verbindungsteile der Verbindungseinrichtung kann so einfach vor Fluid geschützt werden.

Vorteilhafterweise kann zwischen den Korrespondenzelementen wenigstens eines Paares wenigstens eine Dichteinrichtung, insbesondere eine Ringdichtung, bevorzugt eine O-Ringdichtung oder eine kombinierte Dichtung-Rücklaufsperrmembran, angeordnet sein. So kann der mit dem wenigstens einen Paar von Korrespondenzelementen begrenzte fluidführende Bereich der Kontaktbereich der Verbindungsstutzen besser abgedichtet werden.

Vorteilhafterweise kann mit der wenigstens einen Dichtungseinrichtung wenigstens ein fluidführender Bereich der Behandlungsvorrichtung zur Umgebung hin abgedichtet werden. Vorteilhafterweise überragt die äußere Ringdichtung die Verbindungseinrichtung in axialer Richtung um maximal 5 mm nach oben oder nach unten. Dies ist bzgl. der Bauraumausnutzung von Vorteil, da der Dichtungsbereich die axiale Erstreckung der Verbindungseinrichtung nutzt.
Bevorzugt kann die wenigstens eine Dichtungseinrichtung den wenigstens einen Einlass und den wenigstens einen Auslass bezüglich der Verbindungsachse umfangsmäßig umgeben. Auf diese Weise können mit nur einer Dichtung mehrere, insbesondere alle fluidführenden Räume nach außen, insbesondere zur Umgebung und/oder zu den Verbindungsteilen der Verbindungseinrichtung hin, abgedichtet werden.

Vorteilhafterweise kann sich wenigstens eine Dichtungseinrichtung, insbesondere eine Ringdichtung oder in Ringdichtungseinheit, möglichst nah an der Verbindungsachse befinden, also einen möglichst kleinen Durchmesser aufweisen. Auf diese Weise kann eine Kraft, welche von der wenigstens einen Dichtungseinrichtung in axialer Richtung auf die Verbindungseinrichtung ausgeübt werden kann, verringert werden. Die Verbindungsteile der Verbindungseinrichtung können so mechanisch entlastet werden. Dadurch, dass die wenigstens eine Dichtungseinrichtung einen möglichst kleinen Durchmesser aufweist, kann das erforderliche Drehmoment zum Öffnen oder Schließen der Verbindungseinrichtung verringert werden. So können entsprechend die erforderlichen Offnungs- oder Schließkräfte verringert werden. Dies kann sich vorteilhaft auf die Wartungsfreundlichkeit und/oder die Belastbarkeit des Behandlungselements auswirken.

Vorteilhafterweise kann die wenigstens eine Dichtungseinrichtung einen O-Ring oder eine Formdichtung aufweisen. Die Dichtungseinrichtung kann vorteilhafterweise bezüglich der Verbindungsachse radial, insbesondere nach außen oder nach innen, dichtend wirken. Zusätzlich oder alternativ kann die wenigstens eine Dichtungseinrichtung in axialer Richtung dichtend wirken.

Die Dichtungsnut der Dichtungseinheit kann auf ihrer dem Filterbalg axial abgewandten Seite mit einem separaten Abdeckring bedeckt sein. Der Abdeckring kann dabei mittels Klemmlaschen mit dem äußeren Dichtungsstutzen verbunden sein.

In einer bevorzugten Ausführungsform ist die Dichtungsnut der Dichtungseinheit nicht mittels eines separaten Abdeckrings, sondern als Teil des Gehäusedeckels einteilig mit dem Gehäusedeckel ausgebildet. Dies kann sich vorteilhaft auf die Belastbarkeit des Behandlungselements auswirken.

Erfindungsgemäß ist wenigstens eine Dichteinrichtung am Gehäusedeckel angeordnet. Vorteilhafterweise kann wenigstens eine Dichteinrichtung am Behandlungselement, insbesondere der Endscheibe des Filterelements, angeordnet sein. Auf diese Weise kann die wenigstens eine Dichteinrichtung gemeinsam mit dem Behandlungselement ausgetauscht werden.

Vorteilhafterweise kann zwischen dem Behandlungselement, insbesondere der Endscheibe des Filterelements mindestens ein Abstandshalter vorgesehen sein. Bei dem Abstandshalter kann es sich um einen Kunststoffspacer handeln. Hiermit ist der Vorteil der einfacheren Herstellbarkeit verbunden.

Vorteilhafterweise kann das wenigstens eine Führungselement beim Drehen des Behandlungselements an der entsprechenden wenigstens einen Funktionsfläche entlang streifen. Auf diese Weise kann insbesondere beim Öffnen der Verbindungseinrichtung eine axiale Abdrückkraft auf die entsprechende Funktionsfläche erzeugt werden. Mit der axialen Abdrückkraft kann gegen eine mechanische Haltekraft der wenigstens einen Dichteinrichtung gedrückt werden. So kann die wenigstens eine Dichteinrichtung von einer entsprechenden Dichtfläche oder umgekehrt abgezogen oder gedreht werden.

Bei einer weiteren vorteilhaften Ausführungsform kann eine Materialdicke des wenigstens einen ersten Verbindungsteils und/oder des wenigstens einen zweiten Verbindungsteils in Umfangsrichtung zumindest im Bereich der wenigstens einen Funktionsfläche/Gegenfunktionsfläche jeweils konstant sein. So kann der insbesondere axiale Platzbedarf der Verbindungseinrichtung verringert werden.

Bei einer weiteren vorteilhaften Ausführungsform kann das wenigstens eine erste Verbindungsteil und/oder das wenigstens eine zweite Verbindungsteil aus Blech sein oder Blech aufweisen. Blech kann in der Regel in seinem Ausgangszustand als gewalztes Metall in Form von ebenen, flachen Tafeln oder Bändern vorliegen. Blech kann einfach mit einer gleichmäßigen Materialdicke realisiert werden. Aus Blech kann auch mit einer verhältnismäßig geringen Materialdicke ein mechanisch stabiles Verbindungsteil realisiert werden. Auf diese Weise kann der erforderliche Bauraum, insbesondere in axialer Richtung, der Verbindungseinrichtung verringert werden. Blech kann einfach verarbeitet oder bearbeitet, insbesondere gebogen, gefaltet, gestanzt, geschnitten oder geschweißt, werden. Mit Blech können einfach Verbindungen zwischen Bauteilen, insbesondere Bördelverbindungen oder Schweißverbindungen, realisiert werden. Vorteilhafterweise kann wenigstens eines der Verbindungsteile als Blechumformteil ausgeführt sein.

Vorteilhafterweise kann wenigstens eines der Verbindungsteile fest oder lösbar mit dem Behandlungselement verbunden sein. Wenigstens eines der Verbindungsteile kann fest oder lösbar mit dem Anschlusskopf verbunden sein. Das wenigstens eine Verbindungsteil kann mit dem Behandlungselement oder dem Anschlusskopf mittels einer stoffschlüssigen und/oder kraftschlüssigen und/oder formschlüssigen Verbindung, insbesondere mittels einer Bördelverbindung, einer Schweißverbindung, einer Klemmverbindung, einer Rastverbindung, einer Steckverbindung, einer Schraubverbindung und/oder einer Klebeverbindung, verbunden sein.

Vorteilhafterweise kann das Gehäuse-Verbindungsteil mit dem Gehäusedeckel und/oder dem Gehäusetopf insbesondere mittels einer Bördelverbindung und/oder Schweißverbindung verbunden sein. Auf diese Weise kann das Gehäuse-Verbindungsteil stabil mit dem Behandlungselement verbunden sein. Es kann so einfach mit diesem gemeinsam ausgetauscht werden.

Vorteilhafterweise kann das Gehäuse-Verbindungsteil mittels einer zwischen dem Gehäusedeckel und dem Gehäusetopf ausgebildeten Bördelverbindung an dem Gehäuse gehalten sein.

Das Gehäuse-Verbindungsteil kann vorteilhafterweise in Axialrichtung bündig sein zu der axial äußersten Fläche der zwischen dem Gehäusedeckel und dem Gehäusetopf vorgesehenen Bördelverbindung.

Vorteilhafterweise kann der Gehäusedeckel unter Verwendung von Dichtungsmaterial, insbesondere Dichtmasse, dicht mit dem Gehäusetopf insbesondere mittels einer Bördelverbindung verbunden sein.

Vorteilhafterweise kann ein kopfseitiges Verbindungsteil kann bevorzugt an den Anschlusskopf angeschraubt oder angeschweißt sein. Durch Verwendung einer Schraubverbindung kann das kopfseitige Verbindungsteil bei Bedarf einfach von dem Anschlusskopf gelöst werden.

Vorteilhafterweise kann der Gehäusedeckel insbesondere elastisch verformbar sein. Er kann so durch einen insbesondere beim Betrieb der Behandlungsvorrichtung in dem Gehäuse herrschenden Überdruck gegen den Anschlusskopf gepresst werden. Der Anschlusskopf kann so den Gehäusedeckel stützen. So können die Anforderungen an die Druckstabilität des Gehäusedeckels verringert werden. Der Gehäusedeckel kann so einfacher, insbesondere aus einfacheren Materialien, realisiert sein.

Vorteilhafterweise kann eine Mehrzahl von Funktionsflächen des wenigstens einen ersten Verbindungsteils und entsprechenden Gegenfunktionsflächen des wenigstens einen zweiten Verbindungsteils bezüglich der Verbindungsachse umfangmäßig insbesondere gleichmäßig verteilt angeordnet sein. So kann eine umfangsmäßig insbesondere gleichmäßige Kraftübertragung verbessert werden. Ferner kann so insgesamt ein Drehwinkel, welcher erforderlich ist zum Schließen und Öffnen der Verbindungseinrichtung, verkleinert werden. Die umfangsmäßige Erstreckung jeder einzelnen Funktionsfläche/Gegenfunktionsfläche kann so geringer sein, als bei der Verwendung nur eines einzigen Paares aus einer Gegenfunktionsfläche und einer entsprechenden Funktionsfläche. Um eine vergleichbare gleichmäßige Kraftübertragung zu erreichen, müsste sich ein einziges Paar aus einer Gegenfunktionsfläche/Funktionsfläche wenigstens einmal über den gesamten Umfang erstrecken.

Vorteilhafterweise kann die Behandlungsvorrichtung eine Filtervorrichtung zur Filtrierung von flüssigen Fluiden, insbesondere Kraftstoff, Öl oder Wasser, sein. Die Filtervorrichtung kann vorteilhafterweise bei einer Brennkraftmaschine eingesetzt werden.

Vorteilhafterweise kann das Behandlungselement ein Wechselfilter, insbesondere ein Ölwechselfilter oder ein Kraftstoffwechselfilter, sein. Das Gehäuse des Behandlungselements kann dann ein Filtergehäuse sein. Vorteilhafterweise kann in dem Filtergehäuse wenigstens ein Filterelement so angeordnet sein, dass es den wenigstens einen Einlass von dem wenigstens einen Auslass trennen kann. Der Anschlusskopf kann vorteilhafterweise ein Filterkopf sein, an dem der Wechselfilter, insbesondere das Filtergehäuse, mittels der Verbindungseinrichtung lösbar montiert werden kann.

Ein Wechselfilter ist üblicherweise ein Filter, bei dem das wenigstens eine Filterelement gemeinsam mit dem Filtergehäuse ausgetauscht wird. In der Regel ist das wenigstens eine Filterelement fest in dem Filtergehäuse angeordnet. Entsprechend müssen die Verbindungen zwischen Gehäusetopf und Gehäusedeckel nicht zerstörungsfrei lösbar sein.

Die Erfindung ist nicht beschränkt auf eine Behandlungsvorrichtung einer Brennkraftmaschine eines Kraftfahrzeugs. Vielmehr kann sie auch bei andersartigen Brennkraftmaschinen, insbesondere Industriemotoren, eingesetzt werden. Die Erfindung kann auch bei andersartigen Behandlungsvorrichtungen für Fluid innerhalb oder außerhalb der Kraftfahrzeugtechnik verwendet werden. Die Erfindung kann auch bei Luftentölboxen oder Trockenmittelboxen verwendet werden.

Die Aufgabe wird ferner durch das Behandlungselement dadurch gelöst, dass das Behandlungselement wenigstens ein erstes der Verbindungsteile und/oder wenigstens ein zweites der Verbindungsteile aufweist, wobei das wenigstens eine erste der Verbindungsteile auf bezüglich der Verbindungsachse axial gegenüberliegenden Seiten jeweils eine Funktionsfläche aufweist und das wenigstens eine zweite der Verbindungsteile wenigstens eine Gegenfunktionsfläche aufweist, welche zum Zusammenwirken eine der Funktionsflächen des wenigstens einen ersten Verbindungsteils hintergreift, und auf Seiten des wenigstens einen zweiten Verbindungsteils wenigstens ein Führungselement angeordnet ist, welches mit der wenigstens einen Gegenfunktionsfläche wenigstens einen Einführspalt begrenzt, dessen bezüglich der Verbindungsachse axiale Ausdehnung wenigstens so groß ist wie der maximale axiale Abstand der beiden axial gegenüberliegenden Funktionsflächen des wenigstens einen ersten Verbindungsteils und in dem das wenigstens eine erste Verbindungsteil beim Schließen/Offnen der Verbindungseinrichtung geführt werden kann, wobei eine der Funktionsflächen des wenigstens einen ersten Verbindungsteils an der Gegenfunktionsfläche entlang geführt wird und die andere der Funktionsflächen an dem wenigstens einen Führungselement entlang geführt wird.

Die in Verbindung mit der erfindungsgemäßen Behandlungsvorrichtung und dessen vorteilhafte Ausführungsformen aufgezeigten Vorteile und Merkmale gelten für das erfindungsgemäße Behandlungselement und dessen vorteilhafte Ausführungsformen entsprechend und umgekehrt.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen Längsschnitt einer Filtervorrichtung für Motoröl einer Brennkraftmaschine eines Kraftfahrzeugs entlang einer Schnittlinie I-I aus der Figur 3, mit einem Filterkopf und einem Wechselfilter, der mittels einer lösbaren bajonettartigen Verbindungseinrichtung mit dem Filterkopf verbunden ist;
- Figur 2: einen Längsschnitt der Filtervorrichtung aus der Figur 1 entlang einer Schnittlinie II-II aus der Figur 3;
- Figur 3: eine Draufsicht der Filtervorrichtung aus den Figuren 1 und 2;
- Figur 4: eine Detailansicht des Längsschnitts der Filtervorrichtung aus der Figur 1 im Bereich der Verbindungseinrichtung;
- Figur 5: eine isometrische Darstellung des Wechselfilters der Filtervorrichtung aus den Figuren 1 bis 4;
- Figur 6: eine isometrische Darstellung des Filterkopfs der Filtervorrichtung aus den Figuren 1 bis 4.

In den Figuren sind gleiche Bauteile mit gleichen Bezugszeichen versehen.

### Ausführungsform(en) der Erfindung

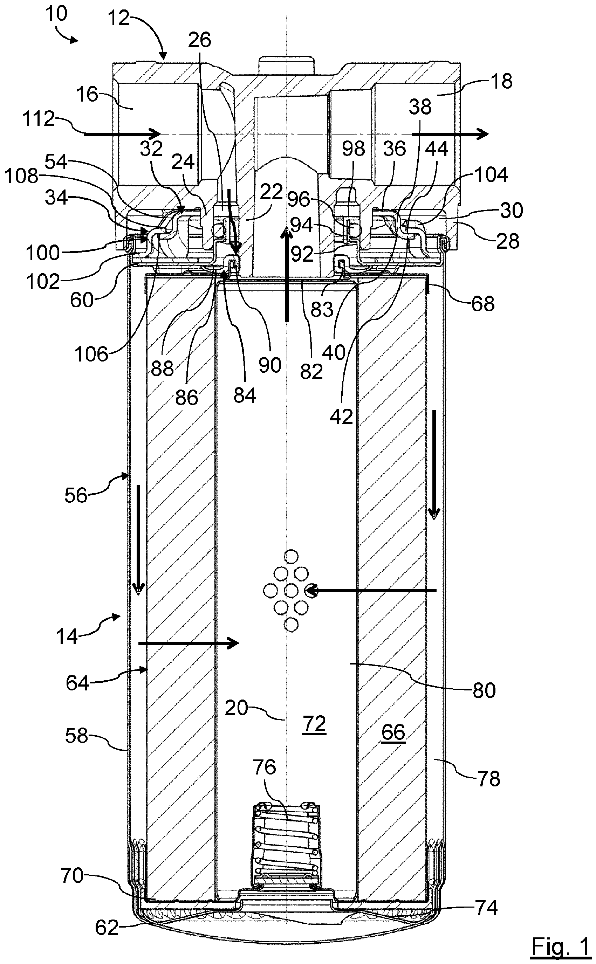

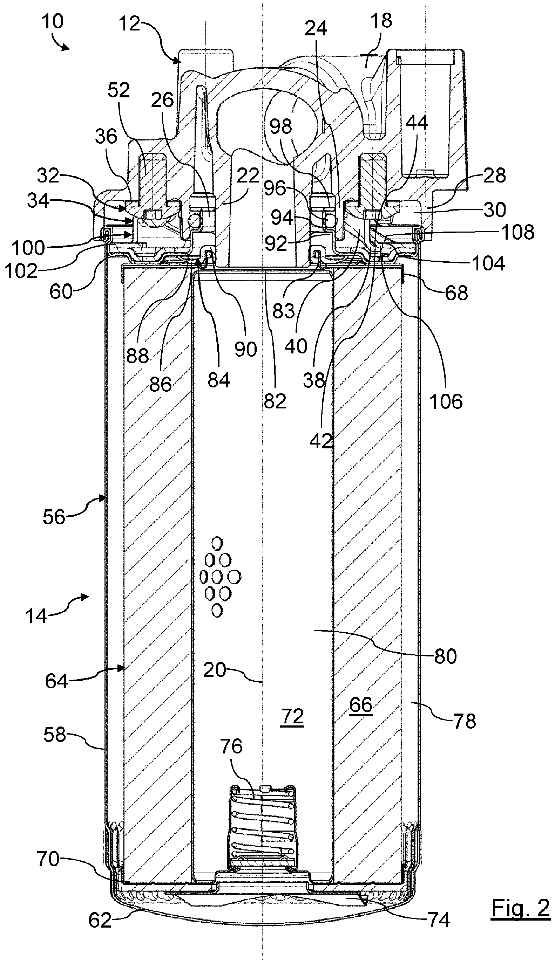

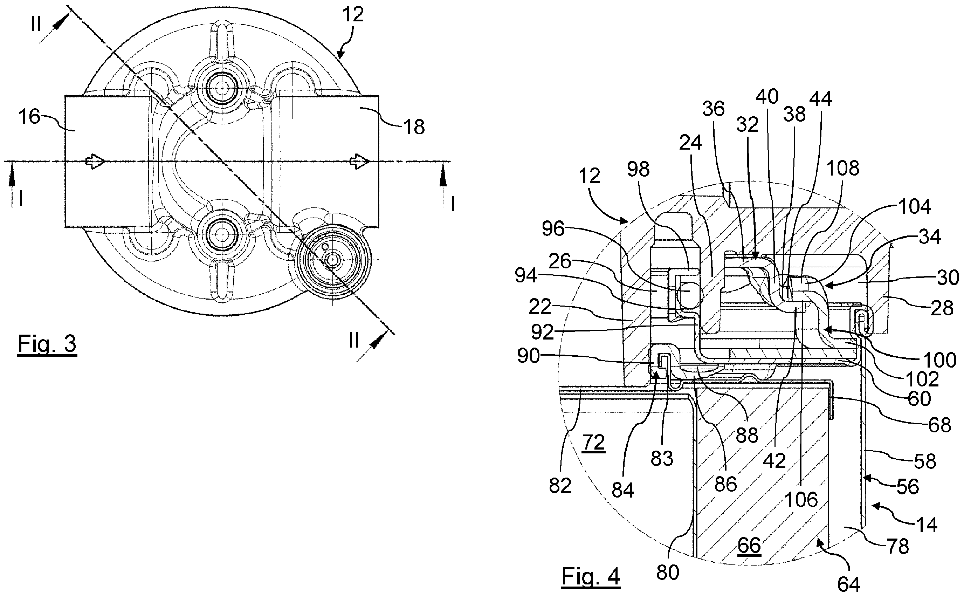

In den Figuren 1 bis 6 ist eine Filtervorrichtung 10 für Motoröl eines Motorölkreislaufs einer Brennkraftmaschine eines Kraftfahrzeugs und deren Komponenten in unterschiedlichen Perspektiven, Schnitten und Detailansichten gezeigt. Die Filtervorrichtung 10 dient zur Reinigung des Motoröls.

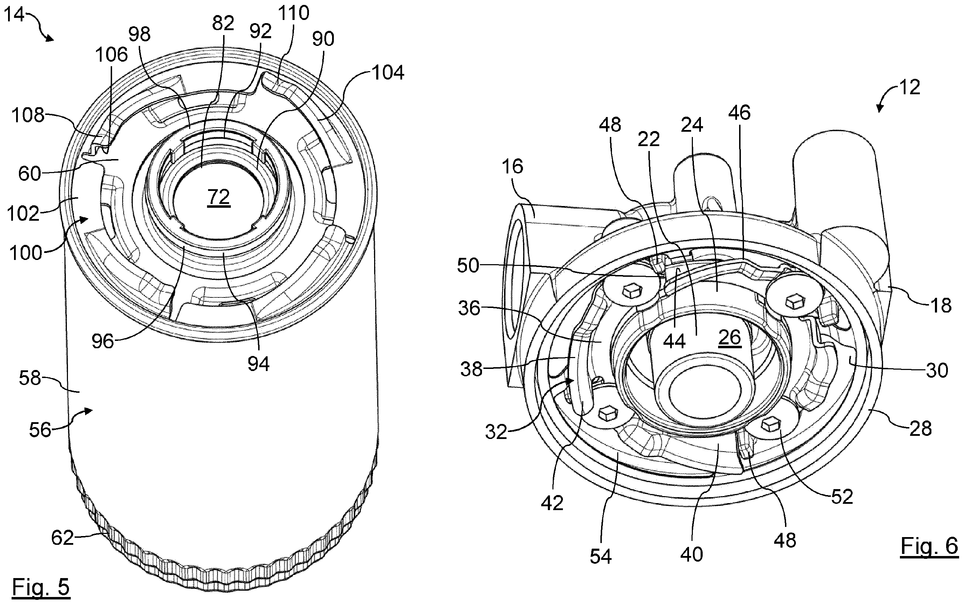

Die Filtervorrichtung 10 umfasst einen Filterkopf 12, an dem ein Wechselfilter 14 lösbar befestigt ist. Der Filterkopf 12 ist fest mit der Brennkraftmaschine verbunden und dient als Anschlussteil für den Wechselfilter 14. Der Filterkopf 12 ist im Detail in der Figur 6 gezeigt. Der Filterkopf 12 umfasst einen Zulauf 16 und einen Ablauf 18 für das Motoröl. Der Zulauf 16 und der Ablauf 18 sind in hier nicht weiter interessierender Weise mit entsprechenden Ölleitungen der Brennkraftmaschine verbunden.

Der Filterkopf 12 weist ferner einen bezüglich einer Verbindungsachse 20 koaxialen radial inneren Anschlussstutzen 22 auf.

Wenn im Folgenden von "axial", "radial", "koaxial", "umfangsmäßig" oder dergleichen die Rede ist, so bezieht sich dies, sofern nicht anders erwähnt, auf die Verbindungsachse 20. Im gezeigten Ausführungsbeispiel fällt die Verbindungsachse 20 mit einer Filterachse des Wechselfilters 14 zusammen.

Der innere Anschlussstutzen 22 ist etwa kreiszylindrisch. Er erstreckt sich auf der Seite des Filterkopfs 12, welche dem Wechselfilter 14 zugewandt ist. Er ist an beiden Stirnseiten offen. Auf seiner dem Wechselfilter 14 abgewandten Seite ist der innere Anschlussstutzen 22 fluidtechnisch mit dem Ablauf 18 verbunden.

Der innere Anschlussstutzen 22 ist koaxial von einem kreiszylindrischen radial äußeren Anschlussstutzen 24 umgeben. Der innere Anschlussstutzen 22 überragt auf der dem Wechselfilter 14 zugewandten Seite den äußeren Anschlussstutzen 24 in axialer Richtung.

Der innere Anschlussstutzen 22 und der äußere Anschlussstutzen 24 begrenzen jeweils umfangsseitig einen koaxialen Einlassringraum 26. Der Einlassringraum 26 ist über eine Fluidverbindung mit dem Zulauf 16 verbunden.

Der innere Anschlussstutzen 22 und der äußere Anschlussstutzen 24 sind koaxial von einer kreiszylindrischen Umfangswand 28 umgeben. Der dem Wechselfilter 14 zugewandte freie Rand der Umfangswand 28 befindet sich etwa auf der gleichen axialen Höhe wie der freie Rand des äußeren Anschlussstutzens 24. Die Umfangswand 28 bildet die radial äußere Begrenzung des Filterkopfs 12 auf der dem Wechselfilter 14 zugewandten Seite. Die Umfangswand 28 und der äußere Anschlussstutzen 24 begrenzen jeweils umfangsseitig einen ringförmigen koaxialen Verbindungsraum 30.

In dem Verbindungsraum 30 ist ein Kopf-Verbindungsteil 32 einer lösbaren bajonettartigen Verbindungseinrichtung 34 angeordnet. Mit der Verbindungseinrichtung 34 ist der Wechselfilter 14 lösbar an dem Filterkopf 12 befestigt. Das insgesamt etwa ringförmige Kopf-Verbindungsteil 32 ist aus Blech geformt. Die Dicke des Blechs ist konstant etwa 2 bis 3 mm.

Radial innen weist das Kopf-Verbindungsteil 32 einen ringförmigen Kopf-Montageabschnitt 36 auf. Der Kopf-Montageabschnitt 36 stößt mit seiner radial inneren Umfangsseite etwa an die radial äußere Umfangsseite des äußeren Anschlussstutzens 24. Der Kopf-Montageabschnitt 36 erstreckt sich etwa in einer Ebene radial und umfangsmäßig. Das Kopf-Verbindungsteil 32 erstreckt sich radial etwa bis zur Mitte des Verbindungsraums 30.

Der Kopf-Montageabschnitt 36 geht in vier kopfseitige Bajonettabschnitte 38 über. Die kopfseitigen Bajonettabschnitte 38 sind in Form und Größe identisch. Die kopfseitigen Bajonettabschnitte 38 sind umfangsmäßig gleichmäßig verteilt angeordnet. Die kopfseitigen Bajonettabschnitte 38 weisen jeweils einen Umfangsabschnitt 40 auf, welcher sich im Wesentlichen umfangsmäßig parallel zu einem gedachten Kreiszylindermantel um die Verbindungsachse 20 erstreckt. Die Umfangsabschnitte 40 gehen auf ihren dem Kopf-Montageabschnitt 36 abgewandten Seiten jeweils in einen Funktionsabschnitt 42 über. Die Umfangsabschnitte 40 verbinden also die Kopf-Montageabschnitt 36 mit den jeweiligen Portionsabschnitten 42. Die Funktionsabschnitte 42 sind insbesondere in der Figur 6 gut sichtbar. Die Funktionsabschnitte 42 weisen jeweils auf ihren dem Wechselfilter 14 abgewandten Seiten eine Gegenfunktionsfläche 44 auf.

Die Funktionsabschnitte 42, insbesondere die Gegenfunktionsflächen 44, haben jeweils einen etwa schraubenförmigen Verlauf um die Verbindungsachse 20. Die Steigung der Gegenfunktionsflächen 44 und der Funktionsabschnitte 42 entsprechen etwa der Steigung eines üblichen Rechtsgewindes. Vom Wechselfilter 14 aus axial betrachtet sind die im Uhrzeigersinn vorderen Enden der Funktionsabschnitte 42 betrachtet jeweils näher an dem Wechselfilter 14 als die im Uhrzeigersinn hinteren Enden. Zwischen den vorderen Enden der Funktionsabschnitte 42 und der Ebene des Kopf-Montageabschnitts 36 besteht jeweils eine Lücke, durch die entsprechende, weiter unten näher erläuterte, gehäuseseitige Bajonettabschnitte 104 eingeführt werden können.

Das Blech des Kopf-Verbindungsteils 32 ist im Kopf-Montageabschnitt 36, in den Umfangsabschnitten 40 und in den Funktionsabschnitten 42 gleich dick. Dies bedeutet auch, dass es in dem Kopf-Montageabschnitt 36 und in den Funktionsabschnitten 42 eine gleichmäßige axiale Ausdehnung hat.

Die Funktionsabschnitte 42 weisen jeweils einen kopfseitigen Rastvorsprung 46 auf. Die Rastvorsprünge 46 sind als jeweilige Biegungen in den Gegenfunktionsflächen 44 realisiert. Die Rastvorsprünge 46 erheben sich axial auf der dem Wechselfilter 14 zugewandten Seite.

Vom Wechselfilter 14 aus betrachtet im Uhrzeigersinn vor jedem Funktionsabschnitt 42 ist ein Führungszapfen 48 angeordnet. Die Führungszapfen 48 sind beispielsweise in der Figur 6 gezeigt. Die Führungszapfen 48 sind getrennt von dem Kopf-Verbindungsteil 32 an dem Filterkopf 12 befestigt. Die Führungszapfen 48 befinden sich jeweils an der Einführseite der kopfseitigen Bajonettabschnitte 38. Sie begrenzen mit den Gegenfunktionsflächen 44 dort jeweils einen kopfseitigen Einführspalt 50, welche ebenfalls in der Figur 6 gezeigt sind.

Das Kopf-Verbindungsteil 32 ist an dem Kopf-Montageabschnitt 36 mit insgesamt vier Schrauben 52, wie in der Figur 6 gezeigt, von der dem Wechselfilter 14 zugewandten Seite an dem Filterkopf 12 befestigt. Die Schrauben 52 befinden sich jeweils zwischen einem im Uhrzeigersinn hinteren Ende eines der kopfseitigen Bajonettabschnittes 38 und einem der Führungszapfen 48 vor dem im Uhrzeigersinn vorderen Ende des nächsten kopfseitigen Bajonettabschnitts 38.

Im Verbindungsraum 30 ist ferner eine ringförmige Blattfeder 54 koaxial angeordnet. Eine radial äußere Umfangsseite der Blattfeder 54 erstreckt sich umfangsmäßig entlang der radial inneren Umfangsseite der Umfangswand 28. Die Blattfeder 54 hat insgesamt vier Federarme. Die Federarme sind umfangsmäßig gleichmäßig verteilt. Die Federarme erstrecken sich bezüglich der Verbindungsachse 22 etwa schraubenförmig im gleichen Drehsinn wie die Funktionsabschnitte 42 des Kopf-Verbindungsteils 32. Sie sind in axialer Richtung federelastisch biegsamen.

Der Wechselfilter 14 ist als Spin-On-Filter mit einem runden Querschnitt ausgelegt. Er ist im Wesentlichen koaxial zur Verbindungsachse 20. Der Wechselfilter 14 weist ein Filtergehäuse 56 mit einem Gehäusetopf 58 auf, in dessen offener Seite ein Gehäusedeckel 60 mit seinem radial äußeren Rand mittels einer Bördelverbindung befestigt ist. Ein radial äußerer Durchmesser des Filtergehäuses 56 im Bereich des Gehäusedeckels 60 ist kleiner als ein radial innerer Durchmesser der Umfangswand 28 des Filterkopfs 12. Der Gehäusetopf 56 hat einen nach außen gewölbten Gehäuseboden 62. Der Gehäusedeckel 60 und der Gehäusetopf 58 sind aus Metall.

In dem Gehäusetopf 58 ist ein koaxiales Filterelement 64 angeordnet. Das Filterelement 64 verfügt über ein zu einem Filterbalg 66 gefaltetes, umfangsmäßig geschlossenes Filtermedium. An seinen Stirnseiten ist der Filterbalg 66 jeweils dicht mit einer Anschlussendscheibe 68, in der Figur 1 oben, und einer Gegenendscheibe 70, unten, verbunden. Die Anschlussendscheibe 68 befindet sich auf der dem Gehäusedeckel 60 zugewandten Seite des Filterelements 64.

Der Filterbalg 66 umgibt einen Elementinnenraum 72 des Filterelements 64. Der Elementinnenraum 72 befindet sich auf einer Reinseite des Filterelements 64.

Die Gegenendscheibe 70 verschließt den Elementinnenraum 72 auf der dem Gehäuseboden 62 zugewandten Stirnseite des Filterelements 64. An der dem Gehäuseboden 62 zugewandten Außenseite der Gegenendscheibe 70 stützen sich mehrere Federelemente 74 ab, die sich andererseits am Gehäuseboden 62 abstützen.

In der Gegenendscheibe 70 ist ein federbelastetes Umgehungsventil 76 angeordnet, welches im Öffnungszustand, unter hier nicht weiter interessierten Bedingungen, eine Ölströmung von Motoröl vom Gehäuseboden 62 direkt unter Umgehung des Filtermediums in den Elementinnenraum 72 zulässt. Das Umgehungsventil 76 ist der Figur 1 in seiner Schließstellung gezeigt.

Das Filterelement 64 ist radial außen von einem rohseitigen Ringraum 78 umgeben, der von der radial inneren Umfangsseite des Gehäusetopfs 58 begrenzt wird.

Im Elementinnenraum 72 erstreckt sich ferner ein koaxiales Mittelrohr 80 zwischen der Gegenendscheibe 70 und der Anschlussendscheibe 68. Eine Umfangswand des Mittelrohrs 80 ist für das Motoröl durchlässig. Eine radial innere Umfangsseite, nämlich radial innere Faltkanten, des Filterbalgs 66 können sich an der radial äußeren Umfangsseite des Mittelrohrs 80 abstützen.

Die Anschlussendscheibe 68 weist eine koaxiale Auslassöffnung 82 für das filtrierte Motoröl auf. An der radial inneren Umfangsseite ist die Anschlussendscheibe 68 zu einem koaxialen Zylinderstutzen 83 geformt, welcher sich axial von dem Elementinnenraum 72 weg erstreckt.

An der axial dem Elementinnenraum 72 abgewandten Seite ist dem Zylinderstutzen 83 ist eine ringförmige koaxiale innere Dichtungseinheit 84 befestigt. Die innere Dichtungseinheit 84 besteht aus einem Elastomer.

Radial außen weist die innere Dichtungseinheit 84 eine Rücklaufsperrmembran 86 auf. Die Rücklaufsperrmembran 86 ist ringförmig und umgibt den Zylinderstutzen 83 radial außen. Die Rücklaufsperrmembran 86 liegt unter einer mechanischen Vorspannung an der dem Filterbalg 66 zugewandten Innenseite des Gehäusedeckels 60 an. Sie verschließt, wie in den Figuren 1, 2 und 4 gezeigt, im druckfreien Zustand eine koaxiale ringförmige Einlassöffnung 88 des Gehäusedeckels 60 für Motoröl. Sobald Motoröl der Filtervorrichtung 10 zugeführt wird, öffnet die Rücklaufsperrmembran 86 aufgrund des Öldrucks in Durchlassrichtung. Ein Rücklauf des Motoröls durch die Einlassöffnung 88 wird durch die Rücklaufsperrmembran 86 verhindert.

Ein radial innerer Ringabschnitt der inneren Dichtungseinheit 84 bildet eine koaxiale innere Ringdichtung 90. Die innere Ringdichtung 90 liegt mit ihrer radial äußeren Umfangsseite dicht an der radial inneren Umfangsseite des Zylinderstutzens 83 an. Die innere Ringdichtung 90 liegt mit ihrer radial inneren Umfangsseite bei montiertem Wechselfilter 14 dicht an einer als Dichtfläche ausgelegten radial äußeren Umfangsseite des radial inneren Anschlussstutzens 22 an. Mit der inneren Ringdichtung 90 wird im Bereich der Einlassöffnung 88 die Reinseite des Wechselfilters 14 von seiner Rohseite getrennt.

Der Gehäusedeckel 60 weist im Bereich der Einlassöffnung 88 einen abgestuften koaxialen äußeren Dichtungsstutzen 92 auf. Eine Einschnürung des äußeren Dichtungsstutzens 92 an seinem dem Filterbalg 66 axial abgewandten Ende bildet eine äußere Dichtungsnut 94 für eine äußere Ringdichtung 96 mit. Die äußere Ringdichtung 96 ist als O-Ring ausgelegt.

Ein radial äußerer Durchmesser des äußeren Dichtungsstutzens 92 außerhalb des Bereiches der Dichtungsnut 94 entspricht etwa dem radial inneren Durchmesser des äußeren Anschlussstutzens 24 des Filterkopfs 12. Bei montiertem Wechselfilter 14 steckt der Dichtungsstutzen 92 in dem äußeren Anschlussstutzens 24. Die radial äußere Umfangsseite des äußeren Dichtungsstutzens 92 liegt dann an der radial inneren Umfangsseite des radial äußeren Anschlussstutzens 24 an.

Die äußere Dichtungsnut 94 ist auf ihrer dem Filterbalg 66 axial abgewandten Seite mit einem Abdeckring 98 bedeckt. Der Abdeckring 98 ist mittels vier Klemmlaschen mit dem äußeren Dichtungsstutzen 92 verbunden.

Bei montiertem Wechselfilter 14 liegt die äußere Ringdichtung 96 an der als Dichtungsfläche ausgelegten radial inneren Umfangsseite des radial äußeren Anschlussstutzens 24 dicht an. Die äußere Ringdichtung 96 trennt so den ölführenden Bereich der Filtervorrichtung 10 von dem Verbindungsraum 30 und von der Umgebung.

Ein ringförmiges koaxiales Gehäuse-Verbindungsteil 100 der Verbindungseinrichtung 34 ist aus Blech geformt. Eine Dicke des Blechs des Gehäuse-Verbindungsteils 100 entspricht etwa der Dicke des Blechs des Kopf-Verbindungsteils 31.

Das Gehäuse-Verbindungsteil 100 erstreckt sich radial von der radial äußeren Umfangsseite des Gehäusedeckels 60 bis über die radiale Mitte des Verbindungsraums 30. Das Gehäuse-Verbindungsteil 100 überlappt das Kopf-Verbindungsteil 32.

Das Gehäuse-Verbindungsteil 100 weist einen Gehäuse-Montageabschnitt 102 auf, welcher sich etwa in einer Ebene radial und umfangsmäßig erstreckt. Der Gehäuse-Montageabschnitt 102 ist radial außen axial zwischen dem Gehäusedeckel 60 und der Bördelverbindungen des Gehäusetopfs 58 mit dem Gehäusedeckel 60 fixiert. Er liegt auf einer Seite flächig an dem Gehäusedeckel 60 auf.

Der Gehäuse-Montageabschnitt 102 geht auf seiner radial inneren Seite in vier identische gehäuseseitige Bajonettabschnitte 104 über. Die gehäuseseitigen Bajonettabschnitte 104 sind umfangsmäßig gleichmäßig verteilt angeordnet. Sie haben etwa die Form und Größe der kopfseitigen Bajonettabschnitte 38.

Die gehäuseseitigen Bajonettabschnitte 104 weisen auf axial gegenüberliegenden Seiten eine innere Funktionsfläche 106 und eine äußere Funktionsfläche 108 auf. Die Funktionsflächen 106 und 108 erstrecken sich entgegengesetzt zu den Gegenfunktionsflächen 44 jeweils etwa schraubenförmig um die Verbindungsachse 20mit der gleichen Steigung wie die Gegenfunktionsflächen 44.

Die inneren Funktionsflächen 106 befinden sich auf der dem Gehäusedeckel 60 zugewandten Seite des jeweiligen gehäuseseitigen Bajonettabschnitts 104. Die äußeren Funktionsflächen 108 befinden sich entsprechend auf der axial gegenüberliegenden Seite. Im Schließzustand der Verbindungseinrichtung 34 werden die äußeren Funktionsflächen 108 jeweils zum Zusammenwirken von einer der Gegenfunktionsfläche 44 eines der kopfseitigen Bajonettabschnitte 38 hintergriffen. Dabei liegen die äußeren Funktionsflächen 108 jeweils flächig an den entsprechenden Gegenfunktionsflächen 44 an.

Die gehäuseseitigen Bajonettabschnitte 104 weisen jeweils einen gehäuseseitigen Rastvorsprung 110 auf. Die Rastvorsprünge 110 erheben sich axial von dem Gehäusedeckel 60 weg. Bei montiertem Wechselfilter 14 verrasten die gehäuseseitigen Rastvorsprünge 110 hinter den entsprechenden kopfseitigen Rastvorsprüngen 46.

Zum Anbau wird der Wechselfilter 14 mit dem Gehäusedeckel 60 voran koaxial auf die Anschlussseite des Filterkopfs 12 gesteckt.

Spätestens wenn der Abdeckring 98 an der Stirnseite des radial äußeren Anschlussstutzens 24 des Filterkopfs 12 und/oder das Gehäuse-Verbindungsteil 100 an dem Kopf-Verbindungsteil 32 ankommt, wird der Wechselfilter 14 zusätzlich im Rechtsdrehsinn, welcher der Schließdrehsinn der Verbindungseinrichtung 34 ist, um die Verbindungsachse 20 gedreht.

Sobald die freien Enden der gehäuseseitigen Bajonettabschnitte 104 im Bereich der entsprechenden kopfseitigen Einführspalte 50 positioniert sind, beginnt die Führung der jeweiligen äußeren Funktionsflächen 108 von außen an den jeweiligen Führungszapfen 48 und der inneren Funktionsflächen 106 entlang der entsprechenden Gegenfunktionsflächen 44. Die Federarme der Blattfedern 54 stützen sich mit ihren freien Enden an dem Gehäuse-Verbindungsteil 100 in axialer Richtung ab. Durch den mit der schraubenförmigen Steigung der Gegenfunktionsfläche 44 und der inneren Funktionsfläche 106 erreichten Zug in axialer Richtung zwischen den Bajonettabschnitten 38 und 104 werden die innere Ringdichtung 90 auf den radial inneren Anschlussstutzen 22 und die äußere Ringdichtung 96 in den radial äußeren Anschlussstutzen 24 gezogen.

Sobald die gehäuseseitigen Rastvorsprünge 110 an den entsprechenden kopfseitigen Rastvorsprüngen 46 anstoßen, muss zum Weiterdrehen eine entsprechende Rastkraft überwunden werden. Die Rastkraft wird durch die Rückstellkraft der Federarme der Blattfeder 54 mit realisiert.

Nach Überwinden der Rastkraft verrasten die gehäuseseitigen Rastvorsprünge 110 hinter den gehäuseseitigen Rastvorsprüngen 46 und sichern somit die Verbindungseinrichtung 34 gegen ungewolltes Öffnen.

Zum Trennen des Wechselfilters 14 von dem Filterkopf 12 wird der Wechselfilter 14 im Linksdrehsinn, also in Offnungsdrehsinn, um die Verbindungsachse 20 gedreht. Hierzu müssen zunächst die Rastkraft der gehäuseseitigen Rastvorsprünge 110 mit den kopfseitigen Rastvorsprüngen 46 überwunden werden.

Unter der Federvorspannung der Blattfeder 54 werden die inneren Funktionsflächen 106 entlang der entsprechenden Gegenfunktionsflächen 44 geführt. Ferner werden die äußeren Funktionsflächen 108 an den jeweiligen Führungszapfen 48 entlang geführt. Dabei wird mit den Führungszapfen 48 jeweils eine axiale Abdrückkraft auf die äußeren Funktionsflächen 108 erzeugt, welche gegen eine jeweilige Haltekraft der inneren Ringdichtung 90 und der äußeren Ringdichtung 96 wirken. Die Haltekräfte werden durch die jeweilige Reibung zwischen der inneren Ringdichtung 90 und dem inneren Anschlussstutzen 22 und zwischen der äußeren Ringdichtung 96 und dem äußeren Anschlussstutzen 24 realisiert. Mittels der Abdrückkraft werden jeweils in axialer Richtung die innere Ringdichtung 90 von dem inneren Anschlussstutzen 22 abgezogen und die äußere Ringdichtung 96 aus dem äußeren Anschlussstutzen 24 herausgezogen.

Sobald nach weiterer Drehbewegung die gehäuseseitigen Bajonettabschnitte 104 die entsprechenden kopfseitigen Einführspalte 50 verlassen, wird der Wechselfilter 14 mit einer axialen Bewegung von dem Filterkopf 12 abgezogen.

Beim Betrieb der Filtervorrichtung 10, also beim Betrieb der Brennkraftmaschine, strömt zu reinigendes Motoröl durch den Zulauf 16, angedeutet durch einen Pfeil 112, in den Einlassringraum 26. Von dort aus strömt das Motoröl durch die Einlassöffnung 88 unter Freigabe durch die Rücklaufsperrmembran 86 in den rohseitigen Ringraum 78 des Filtergehäuses 56. Das zu reinigende Motoröl durchströmt den Filterbalg 66 von radial außen nach radial innen und gelangt durch die Öffnungen des Mittelrohrs 88 in den Elementinnenraum 72. Vom Elementinnenraum 72 gelangt das gereinigte Motoröl durch die Auslassöffnung 82 und den radial inneren Anschlussstutzen 22 des Filterkopfs 12 zum Ablauf 18. Das gereinigte Motoröl verlässt den Filterkopf 12 und damit die Filtervorrichtung 10 durch den Ablauf 18.

## Patentansprüche

1. Behandlungsvorrichtung (10), insbesondere Filtervorrichtung zur Behandlung, insbesondere Filtrierung, von insbesondere flüssigen Fluiden, insbesondere Kraftstoff, Öl oder Wasser, insbesondere einer Brennkraftmaschine, insbesondere eines Kraftfahrzeugs, mit einem Behandlungselement (14), welches ein Gehäuse (56) mit einem Gehäusetopf (58), einem Gehäusedeckel (60), wenigstens einem Einlass (88) für das zu behandelnde Fluid und wenigstens einem Auslass (82) für das behandelte Fluid aufweist, und mit einem Anschlusskopf (12), der wenigstens einen Zulauf (16) für das zu behandelnde Fluid, der mit dem wenigstens einen Einlass (88) verbindbar ist, und/oder wenigstens einen Ablauf (18) für das behandelte Fluid, der mit dem wenigstens einen Auslass (82) verbindbar ist, aufweist, wobei der Anschlusskopf (12) und das Behandlungselement (14) mittels einer lösbaren bajonettartigen Verbindungseinrichtung (34) unter Ausführung einer Dreh-/Steckbewegung um eine Verbindungsachse (20) der Behandlungsvorrichtung (10) miteinander verbunden werden können und die Verbindungseinrichtung (34) wenigstens ein Gehäuse-Verbindungsteil (100) auf Seiten des Gehäuses (56) und wenigstens ein Kopf-Verbindungsteil (32) auf Seiten des Anschlusskopfs (12) aufweist, die zum Verbinden der Verbindungseinrichtung (34) miteinander zusammenwirken können, und wenigstens ein erstes der Verbindungsteile (100) auf bezüglich der Verbindungsachse (20) axial gegenüberliegenden Seiten jeweils eine Funktionsfläche (106, 108) aufweist und wenigstens ein zweites der Verbindungsteile (32) wenigstens eine Gegenfunktionsfläche (44) aufweist, welche zum Zusammenwirken eine der Funktionsflächen (106) des wenigstens einen ersten Verbindungsteils (100) hintergreift, wobei die Materialdicke des Verbindungsteils (100) zumindest im Bereich der wenigstens einen Funktionsfläche (106, 108) konstant ist, **dadurch gekennzeichnet, dass** die Verbindungsteile radial innerhalb von Umfangswänden des Gehäuses (56) und des Anschlusskopfs (12) angeordnet sind und eine Dichtungseinrichtung zum Abdichten eines fluidführenden Bereichs der Behandlungsvorrichtung zur Umgebung hin vorgesehen ist mit einer äußere Ringdichtung (96), die am Gehäusedeckel (60) des Behandlungselements radial innerhalb des Gehäuse-Verbindungsteils (100) angeordnet ist.

2. Behandlungsvorrichtung (10) nach Anspruch 1, **gekennzeichnet dadurch, dass** die äußere Ringdichtung (96) einen in Axialrichtung obersten Punkt des Gehäuse-Verbindungsteils (100) in axialer Richtung um bis zu 5 mm nach oben und einen in Axialrichtung untersten Punkt des Gehäuse-Verbindungsteils (100) in axialer Richtung um bis zu 5 mm nach unten überragt.

3. Behandlungsvorrichtung (10) nach einem der vorigen Ansprüche, **gekennzeichnet dadurch, dass** auf Seiten des wenigstens einen zweiten Verbindungsteils (32) wenigstens ein Führungselement (48) angeordnet ist, welches mit der wenigstens einen Gegenfunktionsfläche (44) wenigstens einen Einführspalt (50) begrenzt, dessen bezüglich der Verbindungsachse (20) axiale Ausdehnung wenigstens so groß ist wie der maximale axiale Abstand der beiden axial gegenüberliegenden Funktionsflächen (106, 108) des wenigstens einen ersten Verbindungsteils (100) und in dem das wenigstens eine erste Verbindungsteil (100) beim Schließen/Öffnen der Verbindungseinrichtung (34) geführt werden kann, wobei eine der Funktionsflächen (106) des wenigstens einen ersten Verbindungsteils (100) an der Gegenfunktionsfläche (44) entlang geführt wird und die andere der Funktionsflächen (108) an dem wenigstens einen Führungselement (48) entlang geführt wird.

4. Behandlungsvorrichtung nach einem der vorigen Ansprüche, **dadurch gekennzeichnet, dass** die wenigstens eine Gegenfunktionsfläche (44) und die wenigstens eine mit dieser zusammenwirkende Funktionsfläche (106) jeweils wenigstens ein Rastelement (46, 110), insbesondere einen Rastvorsprung oder einen Rastabschnitt, wenigstens einer Rastsicherung aufweisen, welche in der Schließposition der wenigstens einen Verbindungseinrichtung (34) hintereinander, miteinander oder ineinander verrasten.

5. Behandlungsvorrichtung nach einem der vorigen Ansprüche, **dadurch gekennzeichnet, dass** die Verbindungseinrichtung (34) wenigstens ein Vorspannelement (54; 190) aufweist zur Realisierung einer mechanischen Vorspannung, mit der die wenigstens eine Gegenfunktionsfläche (44) gegen die wenigstens eine Funktionsfläche (106) gepresst wird.

6. Behandlungsvorrichtung nach einem der vorigen Ansprüche, **dadurch gekennzeichnet, dass** die wenigstens eine Gegenfunktionsfläche (44) und wenigstens die mit dieser zusammenwirkende Funktionsfläche (106) jeweils einen etwa schraubenförmigen Verlauf um die Verbindungsachse (20) haben.

7. Behandlungsvorrichtung nach einem der vorigen Ansprüche, **dadurch gekennzeichnet, dass** das Behandlungselement (14), insbesondere der Gehäusedeckel (60) und/oder eine Endscheibe (68) eines etwaigen Filterelements (64), und der Anschlusskopf (12) jeweils wenigstens ein Korrespondenzelement, insbesondere einen Stutzen, bevorzugt einen Anschlussstutzen (22, 24) und/oder Verbindungsstutzen und/oder Dichtungsstutzen (92) und/oder Zylinderstutzen (83), aufweisen, welche bei montiertem Behandlungselement (14) paarweise korrespondieren.

8. Behandlungsvorrichtung nach Anspruch 7, **dadurch gekennzeichnet, dass** wenigstens ein Paar von Korrespondenzelementen (22, 83) innerhalb wenigstens eines anderen Paares von Korrespondenzelementen (24, 92) angeordnet ist.

9. Behandlungsvorrichtung nach einem der vorigen Ansprüche, **dadurch gekennzeichnet, dass** das wenigstens eine erste Verbindungsteil (32) und/oder das wenigstens eine zweite Verbindungsteil (100) aus Blech ist oder Blech aufweist.

10. Behandlungselement (14) für eine Behandlungsvorrichtung (10) nach einem der vorigen Ansprüche, insbesondere Filtervorrichtung zur Behandlung, insbesondere Filtrierung, von insbesondere flüssigen Fluiden, insbesondere Kraftstoff, Öl oder Wasser, insbesondere einer Brennkraftmaschine, insbesondere eines Kraftfahrzeugs, welches ein Gehäuse (56) aufweist mit einem Gehäusetopf (58), einem Gehäusedeckel (60), wenigstens einem Einlass (88) für das zu behandelnde Fluid und wenigstens einem Auslass (82) für das behandelte Fluid, wobei das Behandlungselement (14) mittels einer lösbaren bajonettartigen Verbindungseinrichtung (34) unter Ausführung einer Dreh-/Steckbewegung um eine Verbindungsachse (20) der Behandlungsvorrichtung (10) mit einem Anschlusskopf (12) der Behandlungsvorrichtung (10) verbunden werden kann und die Verbindungseinrichtung (34) wenigstens einen Gehäuse-Verbindungsteil (100) auf Seiten des Gehäuses (56) aufweist, der zum Verbinden der Verbindungseinrichtung (34) mit wenigstens einem Kopf-Verbindungsteil (32) auf Seiten des Anschlusskopfs (12) zusammenwirken kann, wobei der wenigstens eine Einlass (88) mit wenigstens einem Zulauf (16) des Anschlusskopfs (12) für das zu behandelnde Fluid und/oder der wenigstens eine Auslass (82) mit wenigstens einem Ablauf (18) des Anschlusskopfs (12) für das behandelte Fluid verbunden werden kann, wobei das Behandlungselement (14) wenigstens ein Verbindungsteil (100) aufweist, wobei das wenigstens eine Verbindungsteil (100) auf bezüglich der Verbindungsachse (20) axial gegenüberliegenden Seiten jeweils eine Funktionsfläche (106, 108) aufweist, wobei die Materialdicke des zumindest einen Verbindungsteils (100) zumindest im Bereich der wenigstens einen Funktionsfläche (106, 108) konstant ist **dadurch gekennzeichnet, dass** Gehäuse-Verbindungsteil (100) radial innerhalb der Umfangswand des Gehäuses (56) angeordnet ist und zum Abdichten eines fluidführenden Bereichs der Behandlungsvorrichtung zur Umgebung hin eine äußere Ringdichtung (96) vorgesehen ist, die am Gehäusedeckel (60) des Behandlungselements radial innerhalb des Gehäuse-Verbindungsteils (100) angeordnet ist.

11. Behandlungselement (14) nach Anspruch 10, **dadurch gekennzeichnet, dass** das Verbindungsteil (100) mittels einer stoffschlüssigen Verbindung an dem Gehäusedeckel und/oder an dem Gehäusetopf an dem Gehäuse befestigt ist.

12. Behandlungselement (14) nach einem der Ansprüche 10 bis 11, **dadurch gekennzeichnet, dass** der Gehäusedeckel (60) Blech aufweist.

13. Behandlungselement (14) nach einem der Ansprüche 10 bis 12, **dadurch gekennzeichnet, dass** die äußere Ringdichtung (96) einen in Axialrichtung obersten Punkt des Gehäuse-Verbindungsteils (100) in axialer Richtung um bis zu 5 mm nach oben und einen in Axialrichtung untersten Punkt des Gehäuse-Verbindungsteils (100) in axialer Richtung um bis zu 5 mm nach unten überragt.

14. Behandlungselement (14) nach einem der Ansprüche 10 bis 13, **dadurch gekennzeichnet, dass** die Materialdicke des wenigstens einen Verbindungsteils (100) maximal 3 mm, bevorzugt zwischen 1 mm und 2 mm, beträgt.

15. Behandlungselement (14) nach einem der Ansprüche 10 bis 14, **dadurch gekennzeichnet, dass** die wenigstens eine Funktionsfläche (106) jeweils wenigstens ein Rastelement (110), insbesondere einen Rastvorsprung oder einen Rastabschnitt, wenigstens einer Rastsicherung aufweist.

16. Behandlungselement (14) nach einem der Ansprüche 10 bis 15, **dadurch gekennzeichnet, dass** die wenigstens eine Funktionsfläche (106) jeweils einen etwa schraubenförmigen Verlauf um die Verbindungsachse (20) hat.

## Claims

1. Treatment apparatus (10), in particular filter apparatus for treating, in particular filtering, in particular liquid fluids, in particular fuel, oil or water, in particular of an internal combustion engine, in particular of a motor vehicle, having a treatment element (14) which features a housing (56) with a housing pot (58), a housing cover (60), at least one inlet (88) for the fluid to be treated and at least one outlet (82) for the treated fluid, and having a connecting head (12) which features at least one supply line (16) for the fluid to be treated connectable to the at least one inlet (88), and/or at least one discharge line (18) for the treated fluid connectable to the at least one outlet (82), wherein the connecting head (12) and the treatment element (14) can be connected to each other by means of a releasable bayonet-type connecting means (34) while executing a rotary/plug-in movement around a connecting axis (20) of the treatment apparatus (10), and the connecting means (34) features at least one housing connecting part (100) on the sides of the housing (56) and at least one head connecting part (32) on the sides of the connecting head (12), which can cooperate with one another to connect the connecting means (34), and at least a first of the connecting parts (100) features, on sides axially opposite with respect to the connecting axis (20), in each case one functional surface (106, 108) and at least a second of the connecting parts (32) features at least one counter-functional surface (44) which, for cooperating, engages behind one of the functional surfaces (106) of the at least one first connecting part (100), wherein the material thickness of the connecting part (100) is constant at least in the area of the at least one functional surface (106, 108), **characterized in that** the connecting parts are disposed radially inside the peripheral walls of the housing (56) and of the connecting head (12) and that a sealing means for sealing a fluid-guiding area of the treatment apparatus towards the environment is provided with an outer annular gasket (96) which is disposed radially inside the housing connecting part (100) on the housing cover (60) of the treatment element.

2. Treatment apparatus (10) according to claim 1, **characterized in that** the outer annular gasket (96) projects upwards by up to 5 mm in the axial direction from a top point in the axial direction of the housing connecting part (100) and downwards by up to 5 mm in the axial direction from a bottom point in the axial direction of the housing connecting part (100).

3. Treatment apparatus (10) according to one of the previous claims, **characterized in that** on the sides of the at least one second connecting part (32) is disposed at least one guide element (48), which delimits with the at least one counter-functional surface (44) at least one insertion gap (50), the axial extension of which is with respect to the connecting axis (20) at least as large as the maximum axial distance of the two axially opposing functional surfaces (106, 108) of the at least one first connecting part (100) and in which the at least one first connecting part (100) can be guided during closing/opening of the connecting means (34), wherein one of the functional surfaces (106) of the at least one first connecting part (100) is guided along the counter-functional surface (44) and the other of the functional surfaces (108) is guided along the at least one guide element (48).

4. Treatment apparatus according to one of the previous claims, **characterized in that** the at least one counter-functional surface (44) and the at least one functional surface (106) cooperating therewith feature each at least one latching element (46, 110), in particular a latching projection or a latching portion, of at least one latching securing means, which latch in the closed position of the at least one connecting means (34) one behind the other, with one another or into one another.

5. Treatment apparatus according to one of the previous claims, **characterized in that** the connecting means (34) features at least one biasing element (54; 190) for realizing a mechanical prestress with which the at least one counter-functional surface (44) is pressed against the at least one functional surface (106).

6. Treatment apparatus according to one of the previous claims, **characterized in that** the at least one counter-functional surface (44) and at least the functional surface (106) cooperating therewith each have an approximately helical course around the connecting axis (20).

7. Treatment apparatus according to one of the previous claims, **characterized in that** the treatment element (14), in particular the housing cover (60) and/or an end disk (68) of a possible filter element (64), and the connecting head (12) each feature at least one corresponding element, in particular a piping connection, preferably a union (22, 24) and/or a connecting piece and/or a seal connecting piece (92) and/or a cylinder connecting piece (83), which correspond in pairs when the treatment element (14) is mounted.

8. Treatment apparatus according to claim 7, **characterized in that** at least one pair of correspondence elements (22, 83) is disposed inside at least one other pair of correspondence elements (24, 92).

9. Treatment apparatus according to one of the previous claims, **characterized in that** the at least one first connecting part (32) and/or the at least one second connecting part (100) is made of or features sheet metal.

10. Treatment element (14) for a treatment apparatus (10) according to one of the previous claims, in particular filter apparatus for treating, in particular filtering, in particular liquid fluids, in particular fuel, oil or water, in particular of an internal combustion engine, in particular of a motor vehicle, which features a housing (56) with a housing pot (58), a housing cover (60), at least one inlet (88) for the fluid to be treated and at least one outlet (82) for the treated fluid, wherein the treatment element (14) can be connected to a connecting head (12) of the treatment apparatus (10) by means of a releasable bayonet-type connecting means (34) while executing a rotary/plug-in movement around a connecting axis (20) of the treatment apparatus (10), and the connecting means (34) features at least one housing connecting part (100) on the sides of the housing (56), which can cooperate to connect the connecting means (34) to at least one head connecting part (32) on the sides of the connecting head (12), wherein the at least one inlet (88) can be connected to at least one supply line (16) of the connecting head (12) for the fluid to be treated and/or the at least one outlet (82) can be connected to at least one discharge line (18) of the connecting head (12) for the treated fluid, wherein the treatment element (14) features at least one connecting part (100), wherein the at least one connecting part (100) features a functional surface (106, 108) in each case on axially opposite sides with respect to the connecting axis (20), wherein the material thickness of the at least one connecting part (100) is constant at least in the area of the at least one functional surface (106, 108), **characterized in that** the housing connecting part (100) is disposed radially inside the peripheral wall of the housing (56) and that for sealing a fluid-guiding area of the treatment apparatus towards the environment an outer annular gasket (96) is provided, which is disposed on the housing cover (60) of the treatment element radially inside the housing connecting part (100).

11. Treatment element (14) according to claim 10, **characterized in that** the connecting part (100) is fastened to the housing by means of a bonded connection on the housing cover and/or on the housing pot.

12. Treatment element (14) according to one of claims 10 to 11, **characterized in that** the housing cover (60) features sheet metal.

13. Treatment element (14) according to one of the claims 10 to 12, **characterized in that** the outer annular gasket (96) projects upwards by up to 5 mm in the axial direction from a top point in the axial direction of the housing connecting part (100) and downwards by up to 5 mm in the axial direction from a bottom point in the axial direction of the housing connecting part (100).

14. Treatment element (14) according to one of the claims 10 to 13, **characterized in that** the material thickness of the at least one connecting part (100) is a maximum of 3 mm, preferably between 1 mm and 2 mm.

15. Treatment element (14) according to one of the claims 10 to 14, **characterized in that** the at least one functional surface (106) features in each case at least one latching element (110), in particular a latching projection or a latching portion, of at least one latching securing means.

16. Treatment element (14) according to one of the claims 10 to 15, **characterized in that** the at least one functional surface (106) has in each case an approximately helical course around the connecting axis (20).

## Revendications

1. Dispositif de traitement (10), notamment dispositif de filtration pour le traitement, notamment pour le filtrage de fluides notamment liquides, notamment de carburant, d'huile ou d'eau, notamment d'un moteur à combustion interne, notamment d'un véhicule automobile, avec un élément de traitement (14) qui présente un boîtier (56) avec un pot de boîtier (58), un couvercle de boîtier (60), au moins une entrée (88) pour le fluide à traiter et au moins une sortie (82) pour le fluide traité, et avec une tête de raccord (12) qui présente au moins une arrivée (16) pour le fluide à traiter, laquelle peut être reliée à l'entrée (88), au moins au nombre d'une, et/ou au moins une évacuation (18) pour le fluide traité, laquelle peut être reliée à la sortie (82), au moins au nombre d'une, la tête de raccord (12) et l'élément de traitement (14) pouvant être raccordés l'un à l'autre au moyen d'un dispositif de raccordement (34) amovible de type baïonnette par un mouvement de rotation / d'enfichage autour d'un axe de liaison (20) du dispositif de traitement (10), et le dispositif de raccordement (34) présentant au moins un élément de raccordement de boîtier (100) du côté du boîtier (56) et au moins un élément de raccordement de tête (32) du côté de la tête de raccord (12) qui peuvent interagir ensemble pour relier le dispositif de raccordement (34), et au moins un premier des éléments de raccordement (100) présentant des côtés opposés en sens axial à l'axe de liaison (20) respectivement une surface fonctionnelle (106, 108) et au moins un second des éléments de raccordement (32) présentant au moins une contre-surface fonctionnelle (44) qui est en prise, pour l'interaction, avec une des surfaces fonctionnelles (106) du premier élément de raccordement (100), au moins au nombre d'un, l'épaisseur de matériau de l'élément de raccordement (100) étant constante au moins dans la zone de la surface fonctionnelle (106, 108), au moins au nombre d'une, **caractérisé en ce que** les éléments de raccordement sont disposés en sens radial à l'intérieur de parois circonférentielles du boîtier (56) et de la tête de raccord (12) et qu'un dispositif d'étanchéité destiné à étancher une zone acheminant le fluide du dispositif de traitement est prévu vis-à-vis de l'environnement avec un joint annulaire extérieur (96) qui est disposé, en sens radial à l'intérieur de l'élément de raccordement de boîtier (100), sur le couvercle de boîtier (60) de l'élément de traitement.

2. Dispositif de traitement (10) selon la revendication 1, **caractérisé en ce que** le joint annulaire extérieur (96) dépasse en sens axial de jusqu'à 5 mm vers le haut d'un point le plus haut en sens axial de l'élément de raccordement de boîtier (100) et dépasse en sens axial de jusqu'à 5 mm vers le bas d'un point le plus bas en sens axial de l'élément de raccordement de boîtier (100).

3. Dispositif de traitement (10) selon l'une des revendications précédentes, **caractérisé en ce qu'**au moins un élément de guidage (48) est disposé du côté du second élément de raccordement (32), au moins au nombre d'un, lequel limite, avec la contre-surface fonctionnelle (44), au moins au nombre d'une, au moins une fente d'introduction (50) dont l'ampleur axiale par rapport à l'axe de liaison (20) a au moins la taille de la distance axiale maximale des deux surfaces fonctionnelles (106, 108) opposées en sens axial du premier élément de raccordement (100), au moins au nombre d'un, et dans lequel le premier élément de raccordement (100), au moins au nombre d'un, peut être guidé pendant la fermeture / l'ouverture du dispositif de raccordement (34), l'une des surfaces fonctionnelles (106) du premier élément de raccordement (100), au moins au nombre d'un, étant guidée le long de la contre-surface fonctionnelle (44) et l'autre des surfaces fonctionnelles (108) étant guidée le long de l'élément de guidage (48), au moins au nombre d'un.

4. Dispositif de traitement selon l'une des revendications précédentes, **caractérisé en ce que** la contre-surface fonctionnelle (44), au moins au nombre d'une, et la surface fonctionnelle (106), au moins au nombre d'une, interagissant avec cette surface présentent respectivement au moins un élément d'encliquetage (46, 110), notamment une saillie d'encliquetage ou une section d'encliquetage, au moins d'une sécurité d'encliquetage, ces éléments s'encliquetant les uns derrière, avec ou dans les autres en position fermée du dispositif de raccordement (34), au moins au nombre d'un.

5. Dispositif de traitement selon l'une des revendications précédentes, **caractérisé en ce que** le dispositif de raccordement (34) présente au moins un élément de sollicitation (54; 190) afin de réaliser une sollicitation mécanique avec laquelle la contre-surface fonctionnelle (44), au moins au nombre d'une, est pressée contre la surface fonctionnelle (106), au moins au nombre d'une.

6. Dispositif de traitement selon l'une des revendications précédentes, **caractérisé en ce que** la contre-surface fonctionnelle (44), au moins au nombre d'une, et au moins la surface fonctionnelle (106) interagissant avec cette surface évoluent chacune de manière quasi hélicoïdale autour de l'axe de liaison (20).

7. Dispositif de traitement selon l'une des revendications précédentes, **caractérisé en ce que** l'élément de traitement (14), notamment le couvercle de boîtier (60) et/ou un disque d'extrémité (68) d'un éventuel élément filtrant (64), et la tête de raccord (12) présentent respectivement au moins un élément correspondant, notamment une tubulure, de préférence une tubulure de raccord (22, 24) et/ou une pièce de raccord et/ou une tubulure d'étanchéité (92) et/ou une tubulure cylindrique (83), ces éléments correspondant paire par paire lorsque l'élément de traitement (14) est monté.

8. Dispositif de traitement selon la revendication 7, **caractérisé en ce qu'**au moins une paire d'éléments correspondants (22, 83) est disposée à l'intérieur au moins d'une autre paire d'éléments correspondants (24, 92).

9. Dispositif de traitement selon l'une des revendications précédentes, **caractérisé en ce que** le premier élément de raccordement (32), au moins au nombre d'un, et/ou le second élément de raccordement (100), au moins au nombre d'un, est en tôle ou comporte de la tôle.

10. Élément de traitement (14) pour un dispositif de traitement (10) selon l'une des revendications précédentes, notamment dispositif de filtration pour le traitement, notamment pour le filtrage de fluides notamment liquides, notamment de carburant, d'huile ou d'eau, notamment d'un moteur à combustion interne, notamment d'un véhicule automobile, qui présente un boîtier (56) avec un pot de boîtier (58), un couvercle de boîtier (60), au moins une entrée (88) pour le fluide à traiter et au moins une sortie (82) pour le fluide traité, l'élément de traitement (14) pouvant être raccordé à une tête de raccord (12) du dispositif de traitement (10) au moyen d'un dispositif de raccordement (34) amovible de type baïonnette par un mouvement de rotation / d'enfichage autour d'un axe de liaison (20) du dispositif de traitement (10), et le dispositif de raccordement (34) présentant au moins un élément de raccordement de boîtier (100) du côté du boîtier (56) qui peut interagir afin de relier le dispositif de raccordement (34) à au moins un élément de raccordement de tête (32) du côté de la tête de raccord (12), l'entrée (88), au moins au nombre d'une, pouvant être reliée à une arrivée (16), au moins au nombre d'une, de la tête de raccord (12) pour le fluide à traiter et/ou la sortie (82), au moins au nombre d'une, pouvant être reliée à une évacuation (18), au moins au nombre d'une, de la tête de raccord (12) pour le fluide traité, l'élément de traitement (14) présentant au moins un élément de raccordement (100), l'élément de raccordement (100), au moins au nombre d'un, présentant des côtés opposés en sens axial à l'axe de liaison (20) respectivement une surface fonctionnelle (106, 108), l'épaisseur de matériau de l'élément de raccordement (100), au moins au nombre d'un, étant constante au moins dans la zone de la surface fonctionnelle (106, 108), au moins au nombre d'une, **caractérisé en ce que** l'élément de raccordement de boîtier (100) est disposé en sens radial à l'intérieur de la paroi circonférentielle du boîtier (56) et qu'un joint annulaire extérieur (96) est prévu afin d'étancher une zone acheminant le fluide du dispositif de traitement vis-à-vis de l'environnement, ce joint étant disposé sur le couvercle de boîtier (60) de l'élément de traitement, en sens radial à l'intérieur de l'élément de raccordement de boîtier (100).

11. Élément de traitement (14) selon la revendication 10, **caractérisé en ce que** l'élément de raccordement (100) est fixé au boîtier par liaison de matière sur le couvercle de boîtier et/ou sur le pot de boîtier.

12. Élément de traitement (14) selon l'une des revendications 10 à 11, **caractérisé en ce que** le couvercle de boîtier (60) comporte de la tôle.

13. Élément de traitement (14) selon l'une des revendications 10 à 12, **caractérisé en ce que** le joint annulaire extérieur (96) dépasse en sens axial de jusqu'à 5 mm vers le haut d'un point le plus haut en sens axial de l'élément de raccordement de boîtier (100) et dépasse en sens axial de jusqu'à 5 mm vers le bas d'un point le plus bas en sens axial de l'élément de raccordement de boîtier (100).

14. Élément de traitement (14) selon l'une des revendications 10 à 13, **caractérisé en ce que** l'épaisseur de matériau de l'élément de raccordement (100), au moins au nombre d'un, est de 3 mm au maximum, et de préférence comprise entre 1 mm et 2 mm.

15. Élément de traitement (14) selon l'une des revendications 10 à 14, **caractérisé en ce que** la surface fonctionnelle (106), au moins au nombre d'une, présente au moins un élément d'encliquetage (110), notamment une saillie d'encliquetage ou une section d'encliquetage, au moins d'une sécurité d'encliquetage.

16. Élément de traitement (14) selon l'une des revendications 10 à 15, **caractérisé en ce que** la surface fonctionnelle (106), au moins au nombre d'une, évolue de manière quasi hélicoïdale autour de l'axe de liaison (20).
